# EUROPEAN PATENT SPECIFICATION

(11) **EP 4 011 543 B1**
(45) Date of publication and mention of the grant of the patent: **04.11.2026**
(21) Application number: 20865504.3
(22) Date of filing: 10.06.2020
(51) Int. Cl.: B23K 35/30, B23K 35/02, B23K 35/38, B23K 35/40, C22C 38/04, C22C 38/14, C22C 38/02, C22C 38/16, C22C 38/06, C21D 8/06, C21D 9/52, C21D 6/00, B23K 9/16, B23K 9/173, B23K 9/025, B23K 9/23

(54) **WIRE FOR GAS-SHIELDED ARC WELDING**
DRAHT ZUM SCHUTZGASSCHWEISSEN
FIL POUR SOUDAGE A L'ARC SOUS PROTECTION GAZEUSE

(30) Priority: 17.09.2019 JP 2019168877
(43) Date of publication of application: 15.06.2022
(73) Proprietor: KABUSHIKI KAISHA KOBE SEIKO SHO (KOBE STEEL, LTD.), Hyogo 651-8585 (JP)
(72) Inventor: KINASHI, Hikaru, Kanagawa 251-8551 (JP); YU, Jing, Kanagawa 251-8551 (JP); YOKOTA, Yasuyuki, Kanagawa 251-8551 (JP)
(74) Representative: Müller-Boré & Partner Patentanwälte PartG mbB
(86) International application number: PCT/JP2020/022933
(87) International publication number: WO 2021/053900

(56) References cited:
- WO-A1-2019/124305
- JP-A- 2000 141 080
- JP-A- 2001 129 684
- JP-A- 2006 198 623
- JP-A- 2007 253 163
- JP-A- 2018 126 755
- JP-A- 2019 107 697
- JP-A- H0 999 390
- JP-A- H07 100 687
- JP-A- H08 103 884
- JP-A- H11 197 884
- JP-A- S5 781 995
- JP-A- S63 157 794
- US-A1- 2011 253 679
- US-A1- 2017 144 257

## Description

### TECHNICAL FIELD

The present invention relates to a wire for gas-shielded arc welding.

### BACKGROUND ART

in recent years, technical developments relating to improvements in fuel efficiency of automobiles and the like have been actively promoted due to the increase of demand levels of environmental performances. Examples of a method of improving the fuel efficiency of the automobiles and the like include improvements of efficiency of an internal combustion engine, hybridization of an internal combustion engine, and electrification of an internal combustion engine. Since the weight of the vehicle body tends to be increased due to the mounting of a battery in the case of electrification, the development of a lightweight technology has been also advanced. For example, attempts of reducing the weight of a vehicle by using a thin steel sheet having a strength higher than a steel sheet in the related art to reduce the thickness of the vehicle have been actively promoted.

Such weight reduction by reducing the thickness of materials for automobile parts has been given priority in the framework of the vehicle body, and 1.5 GPa class ultra-high tensile strength steel and hot stamp steel, which are excellent in formability, have been used as materials for the body framework.

On the other hand, as for underbody parts, the application is limited to 440 to 980 MPa class hot-rolled steel sheets. As one of the reasons thereof, since underbody parts are exposed to a corrosive environment due to salt damage contained in moisture or snow melting agents from a road surface, the local reduction in thickness of the steel sheet is a problem. Therefore, in order to realize a further reduction in the weight of the vehicle, there is also a need for a technology capable of preventing corrosion of the underbody parts as well as the need for underbody parts having sufficient strength and durability even when the thickness of the steel sheet is reduced.

In general, a method of electrodeposition coating after arc welding is adopted as a method of protecting underbody parts from a corrosive environment. However, when the electrodeposition coating is performed after the welding, an electrodeposition coating film is not formed on a weld slag, resulting in a coating defect, and a problem of corrosion progressing from this defect has occurred. Therefore, welding defects are prevented by increasing the thickness of the electrodeposition coating film, but the coating film may peel off together with a slag portion due to the force applied during traveling, and corrosion may be progressed from a part from which the coating film peels off, even if the coating film is formed on the slag.

In addition, regarding parts used in closer to a road surface and parts that are thinner among the underbody parts, a method of improving corrosion resistance based on a sacrificial anticorrosion effect of zinc by using a galvanized steel sheet, even when the coating film is peeled off, is adopted as measures against the corrosion. However, zinc is vaporized in the weld portion by heat during arc welding, and thus the effect of improving the corrosion resistance in the weld bead cannot be sufficiently expected. Therefore, corrosion due to the poor coating on the welding slag may occur, or even when a coating film is formed, corrosion may occur due to the peeling of the slag during traveling.

Here, for example, Patent Literature 1 discloses a welding wire in which the contents of C, Si, and Mn are adjusted and a total content of one or two or more selected from Zr, Ti, and Al is adjusted to prevent degradation of durability of parts caused by not forming the coating film on a portion covered by the slag even when the electrodeposition coating is performed after welding. Patent Literature 1 discloses that the peeling property of the slag adhering to the weld portion after welding is excellent, and the slag can be easily peeled off. In recent years, a method of physically removing a slag after welding has been used for ensuring reliability, mainly for luxury cars.

Patent literature JP 2001-129684 A discloses a steel wire for gas-shielded arc welding that reduces the amount of spatter generated in pulse CO2 welding.

### CITATION LIST

### PATENT LITERATURE

Patent Literature 1: JP S62-124095 A

### SUMMARY OF INVENTION

### TECHNICAL PROBLEM

However, when the wire described in Patent Literature 1 is used, the number of production steps is increased and the production cost is increased because of the addition of a slag removal step. Further, during the arc welding, there is a demand for a wire with less spatter generation in consideration of workability or the like.

The present invention has been made in view of the above-described situations, and an object of the present invention is to provide a wire for gas-shielded arc welding, by which the amount of spatter generated during welding is small, a step of removal of the slag after welding or the like is unnecessary, and a weld portion having excellent electrodeposition coatability can be obtained.

### SOLUTION TO PROBLEM

As a result of intensive studies to solve the above problems, the present inventors have found that, by adjusting the contents of Si and Ti in the wire and appropriately controlling the balance of components, it is possible to reduce the amount of spatter generated during welding and uniformly form a thin slag having high adhesiveness in the weld portion, and as a result, it is possible to prevent defects from being generated in the coating film formed by the electrodeposition coating on the weld portion. Although the mechanism by which a thin slag is uniformly formed after welding to form an electrodeposition coating film uniformly over the whole is not clear, it is presumed that this is caused by the difference in conductivity between the thin slag and the thick slag. In addition, the reason why the coating film peels off with the slag when an electrodeposition coating film with a large thickness is formed is presumed as follows: steps are formed on a surface of a part due to formation of the coating film on an uneven slag with high peeling property, and the force is likely to be applied during the traveling.

The present invention has been made based on these findings.

The invention is defined in the appended claims.

### ADVANTAGEOUS EFFECTS OF INVENTION

In the present invention, it is possible to provide a wire for gas-shielded arc welding, by which the amount of spatter generated during welding is small, a step of removal of the slag after welding or the like is unnecessary, and a weld portion having excellent electrodeposition coatability can be obtained.

### BRIEF DESCRIPTION OF DRAWINGS

FIG. 1 is a perspective view showing conditions of gas-shielded arc welding.
FIG. 2 is a side view showing conditions of the gas-shielded arc welding.

### DESCRIPTION OF EMBODIMENTS

Hereinafter, embodiments for carrying out the present invention are described in detail. It should be noted that the present invention is not limited to the embodiments described below, and can be optionally changed without departing from the scope of the present invention. Hereinafter, the reason for the addition and the reason for the numerical limitation of the components contained in a wire for gas-shielded arc welding in the present embodiment are described in detail. In the following description, the amount of each component in the wire is defined by the content thereof relative to the total mass of the wire.

### <C: 0.01 mass% or more and 0.10 mass% or less>

C is a component having a deoxidizing action and an effect of increasing strength of weld metal. Since one-pass welding is applied in welding of a thin sheet, there is no possibility that the strength is reduced unlike the case of multilayer welding that accompanies reheating, and strength equal to or higher than that of the base metal can be obtained.

If the content of C in the wire is less than 0.01 mass%, it is difficult to obtain a minimum strength required for a mild steel. Therefore, the content of C in the wire is 0.01 mass% or more, preferably 0.02 mass% or more, and more preferably 0.03 mass% or more, based on a total mass of the wire.

On the other hand, if the content of C in the wire is more than 0.10 mass%, the deoxidizing action is increased, and the viscosity of droplets is increased, and thus spatter is likely to occur due to a short circuit. In addition, CO is generated in a vicinity of an arc due to a combination of C and oxygen, and thus spatter is likely to occur due to the explosion, and fume emission increases. Accordingly, the content of C is preferably small, as long as it is within a range at which the desired strength of the weld metal can be obtained. Therefore, the content of C in the wire is 0.10 mass% or less, preferably 0.09 mass% or less, and more preferably 0.08 mass% or less, based on the total mass of the wire.

### <Si: 0.05 mass% or more and 0.55 mass% or less>

Si is a component having a deoxidizing action and having an effect of improving the shape of a weld bead. The content of Si in the wire is appropriately controlled, so that a shape of a welding end portion can be formed into a smooth shape of the bead.

In addition, when an appropriate amount of Si is contained in the wire, the adhesiveness between a slag and a weld metal can be enhanced by the Si phase existing in the slag. As a result, rust prevention can also be improved. In addition, when the appropriate amount of Si is contained, the amount of spatter generated during welding is reduced. Therefore, the content of Si in the wire is 0.05 mass% or more based on the total mass of the wire, and since the spatter is likely to occur when the content of Si is small, the content of Si is preferably 0.10 mass% or more, more preferably 0.12 mass% or more, and still more preferably 0.15 mass% or more, based on the total mass of the wire.

On the other hand, if the content of Si in the wire is more than 0.55 mass%, a slag formed by combining Si with oxygen is likely to aggregate and a thickness of the slag is increased. Accordingly, an electrodeposition coating film is less likely to be formed on a surface of the slag, and coating defects are generated. Therefore, the content of Si in the wire is 0.55 mass% or less, preferably 0.40 mass% or less, more preferably 0.35 mass% or less, still more preferably 0.30 mass% or less, and even more preferably 0.25 mass% or less, based on the total mass of the wire.

### <Mn: 1.60 mass% or more and 2.40 mass% or less>

Mn is an important component for ensuring the desired strength of the weld metal. In the wire in the present embodiment, since each of the content of C and the content of Si in the wire is limited to the specific range in order to improve the workability and the rust prevention of a weld portion, it is necessary to appropriately control the content of Mn in order to obtain a sufficient strength of the weld metal. Since MnO has conductivity higher than SiO₂, a coating film is likely to be formed on the slag uniformly in the electrodeposition coating after welding when the content of MnO in the slag is high.

If the content of Mn in the wire is less than 1.60 mass%, it is difficult to obtain sufficient strength of the weld metal, and the effect of forming a coating film on the slag cannot be sufficiently obtained. Therefore, the content of Mn in the wire is 1.60 mass% or more, preferably 1.65 mass% or more, more preferably 1.70 mass% or more, and still more preferably 1.80 mass% or more, based on the total mass of the wire.

On the other hand, if the content of Mn in the wire is more than 2.40 mass%, the deoxidation proceeds excessively, and the amount of oxygen in a molten pool decreases. Accordingly, the viscosity and surface tension of the droplets become high, and the shape of the bead is impaired. Therefore, the content of Mn in the wire is 2.40 mass% or less, preferably 2.30 mass% or less, more preferably 2.20 mass% or less, and still more preferably 2.10 mass% or less, based on the total mass of the wire.

### <Cu: 0.30 mass% or less>

Cu has an effect of improving the rust prevention of the wire, and addition of proper amount of Cu is preferable, but Cu may not be contained. The content of Cu in the wire is preferably 0.05 mass% or more, more preferably 0.10 mass% or more, and still more preferably 0.15 mass% or more, based on the total mass of the wire. On the other hand, if the content of Cu is more than 0.30 mass%, the required cracking resistance cannot be obtained. Therefore, the content of Cu in the wire is preferably 0.25 mass% or less, and more preferably 0.20 mass% or less.

### <Ti: 0.05 mass% or more and 0.25 mass% or less>

Ti is one of the most important elements in the wire in the present embodiment and is a component having a deoxidizing action and an action of changing the physical properties of the slag. Although the mechanism related to the effect of Ti is not necessarily clear, the present inventors have found the tendency that when the wire contains an appropriate amount of Ti, a composite slag made of Si, Mn, and Ti is formed such that the surrounding is covered by Ti. Such a slag not only has electrodeposition coatability but also has good adhesiveness between the slag and the base metal, so that corrosion hardly proceeds.

If the content of Ti in the wire is less than 0.05 mass%, it is difficult to obtain a desired state of the slag. Therefore, the content of Ti in the wire is 0.05 mass% or more, preferably 0.13 mass% or more, and more preferably 0.16 mass% or more, based on the total mass of the wire.

On the other hand, if the content of Ti in the wire is more than 0.25 mass%, the deoxidation proceeds excessively, and the slag generation amount is excessively large. Thus, the shape of the bead is deteriorated due to increase in thickness of the slag and the deoxidizing action that proceeds excessively. Therefore, the content of Ti in the wire is 0.25 mass% or less, preferably 0.23 mass% or less, and more preferably 0.21 mass% or less, based on the total mass of the wire.

### <Al: 0.10 mass% or less>

Al is a component having a deoxidizing action and having an action of changing the physical properties of the slag. Al is an element that reduces the adhesiveness of the slag since Al has an effect of aggregating the slag. Therefore, the content of Al in the wire is 0.10 mass% or less, preferably 0.05 mass% or less, and more preferably 0.03 mass% or less, based on the total mass of the wire.

### <P: 0.025 mass% or less (including 0 mass%)>

P is an element that reduces the cracking resistance of the weld metal, and the smaller the content of P in the wire is, the more preferred it is.

If the content of P in the wire is more than 0.025 mass%, the required cracking resistance cannot be obtained. Therefore, the content of P in the wire is 0.025 mass% or less, preferably 0.020 mass% or less, more preferably 0.015 mass% or less, and still more preferably 0.010 mass% or less, based on the total mass of the wire.

### <S: 0.010 mass% or less (including 0 mass%)>

S is an element having an effect of aggregating the slag. For example, when the content of S in the wire is changed in a state where the amount of slag is constant, the slag aggregates to increase the thickness with an increase in the content of S and the electrodeposition coatability decreases, so that the smaller the content of S is, the more preferred it is.

If the content of S in the wire is more than 0.010 mass%, it is difficult to uniformly form a thin slag on the weld metal, and there is a possibility that the electrodeposition coating film is not formed or is peeled off with the slag. Therefore, the content of S in the wire is 0.010 mass% or less, preferably 0.008 mass% or less, and more preferably 0.005 mass% or less, based on the total mass of the wire.

### <Remainder>

The remainder of the wire in the present embodiment is Fe and inevitable impurities. Examples of the inevitable impurities include Zr, Li, Sn, Bi, B, As and the like.

Further, for the purpose of improving the strength, Ni, Cr, Co, Sb or the like may be actively added to the wire in the present embodiment. For example, the wire may contain Ni, Cr, Co and/or Sb in a range of Ni ≤ 0.10 mass%, Cr ≤ 0.10 mass%, Co ≤ 0.10 mass%, and Sb ≤ 0.01 mass%.

### <1.0 ≤ [Ti]/[Si] ≤ 3.0>

A distribution state of the slag can be controlled by appropriately controlling the ratio of the content of Ti to the content of Si in the wire. When the generation of the slag in the molten pool during welding is observed, a state where a large number of fine slags are generated is observed. Therefore, a thin slag is assumed to be spread on the weld metal when the ratio of the content of Ti to the content of Si is appropriately controlled.

In the case where the content of Si (mass%) based on the total mass of the wire is defined as [Si] and the content of Ti (mass%) based on the total mass of the wire is defined as [Ti], when the content of Si is high relative to the content of Ti and [Ti]/[Si] is less than 0.1, there is a possibility that the slag aggregates and the electrodeposition coating film is not formed or is peeled off with the slag. Therefore, in order to reduce the thickness of the slag, it is necessary to control the value of [Ti]/[Si] to 1.0 or more.

On the other hand, when the content of Ti is high relative to the content of Si and [Ti]/[Si] is more than 3.0, the generation amount of the slag is excessively increased, the thickness of slag is increased, and the shape of the bead is deteriorated. Therefore, [Ti]/[Si] is required to be 3.0 or less, preferably 2.8 or less, and more preferably 2.5 or less.

### <([Si]+[Ti]/3)/([C]/2+2×[Al]) ≥ 5>

The amount of spatter generated during welding can be reduced by appropriately controlling a ratio of the content of Si and content of Ti to the content of C and content of Al in the wire. For example, when the droplet transfer behavior during pulsed arc welding was observed, a state where the detachment of the droplets was not satisfactory to cause a short circuit when the viscosity is too low, or a state where spatter was generated from the molten pool itself was observed. When the ratio of the content of Si and content of Ti to the content of C and content of Al is appropriately controlled, it is assumed that the droplets are easily detached and the amount of spatter is reduced by preventing an excessive decrease in the viscosity.

In the case where the content of Si (mass%) based on the total mass of the wire is defined as [Si], the content of Ti (mass%) based on the total mass of the wire is defined as [Ti], the content of C (mass%) is defined as [C], and the content of Al (mass%) based on the total mass of the wire is defined as [Al], when a value obtained by ([Si]+[Ti]/3)/([C]/2+2×[Al]) is 5 or more, the droplet detachment is good, the number of short circuits is appropriately maintained, and welding with less spatter can be performed. Therefore, the value obtained by ([Si]+[Ti]/3)/([C]/2+2×[Al]) is preferably 5 or more, more preferably 7 or more, and still more preferably 10 or more.

### <Shielding gas: Ar-CO₂ mixed gas>

As for the wire in the present embodiment, for example, Ar-CO₂ mixed gas may be used as the shielding gas. When the Ar-CO₂ mixed gas is used, the amount of the slag generated by oxidation decreases since the amount of oxygen contained in the shielding gas is small. As the ratio in the Ar-CO₂ mixed gas, for example, 80 vol% of Ar-20 vol% of CO₂ mixed gas or the like may be used.

The welding posture in a case of using the wire in the present embodiment is not particularly limited. Further, the size (diameter) of the wire in the present embodiment is not particularly limited, and a wire having a diameter defined in accordance with a welding material standard such as AWS or JIS may be used.

### <Production of wire>

When the wire in the present embodiment is produced, the wire can be produced by a usual method without requiring a special production condition. For example, steel having the above components is melted to obtain an ingot. The ingot is subjected to hot forging or the like as necessary, and then hot rolling is performed and further cold drawing is performed to form a wire. The wire is annealed at a temperature of about 500°C to 900°C as necessary, and after pickling, the wire is subjected to copper plating as necessary, and further subjected to finishing drawing as necessary to have a target wire diameter. Thereafter, a lubricant is applied, as necessary, to form a wire for welding.

### Examples

Hereinafter, the effects of the present invention are specifically described with reference to Invention Examples and Comparative Examples, but the present invention is not limited thereto.

### [Production of wire]

A wire for gas-shielded arc welding having a wire diameter of 1.2 mm was produced so as to have the contents of various chemical components in the wire, as shown in Table 2.

### [Gas-shielded arc welding]

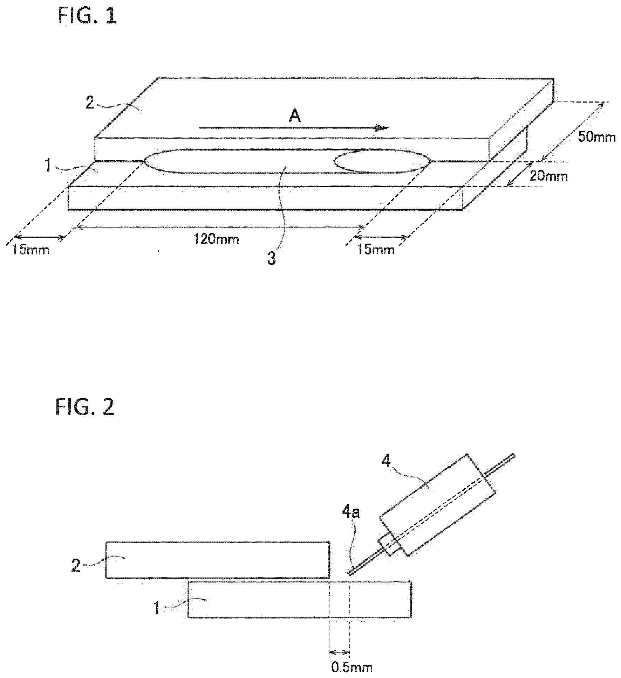

FIG. 1 is a perspective view showing conditions of the gas-shielded arc welding using wires in Invention Examples and Comparative Examples, and FIG. 2 is a side view thereof. Two plate-shaped steel sheets 1 and 2 each having a length of 150 mm, a width of 50 mm, and a thickness of 2.9 mm were stacked so as to be shifted by 20 mm in a width direction (route interval: 0 mm) horizontally, and a fillet portion which was formed between an upper surface of the lower steel sheet 1 and a side surface of the upper steel sheet 2 was subjected to horizontal fillet welding that was performed under the welding conditions shown in Table 1 below by using each of the wire for gas-shielded arc welding in Invention Examples and Comparative Examples.

The welding started at a position that was 15 mm away from one ends of the steel sheets 1 and 2 in a longitudinal direction, the welding proceeded in a direction of an arrow A at a distance of 120 mm, and then welding was ended at a position that was on the opposite side to the welding start position and was 15 mm away from the other ends of the steel sheets 1 and 2 in the longitudinal direction, thereby forming a weld metal 3. As shown in FIG. 2, an angle of a welding torch 4 was 45° relative to a direction vertical to the steel sheet 1, and a target position of a wire 4a was about 0.5 mm away from an end surface of the steel sheet 2 in the width direction.

**Table 1**

| Welding mode | Pulsed MAG welding (Pulsed metal active gas welding) |
|---|---|
| Welding current | 200 A to 210 A |
| Arc voltage | 24 V |
| Travel speed | 800 mm/min |
| Electrode extension | 15 mm |
| Shielding gas composition | 80 vol% of Ar-20 vol% of CO₂ |
| Shielding gas flow rate | 25 L/min |

### [Evaluation of wire]

### <<Slag adhesiveness>>

The slag adhesiveness was evaluated by beating, with a steel chisel, a surface of the weld metal after welding, and inspecting whether the slag fell. The slag adhesiveness was evaluated as "o" (good) in the case where the slag did not fall off from the surface of the weld metal, and was evaluated as "×" (poor) in the case where the slag was easily peeled off and fell off.

### <<Rust prevention>>

A coating film was formed by the electrodeposition coating on a surface of a bonding member obtained by the welding, and then a cycle corrosion test was carried out in accordance with JIS K 5600-7-9 to evaluate the rust prevention. The rust prevention was evaluated as "∘" (good) in the case where an area proportion of rust generated on the weld bead after 30 cycles of cycle corrosion tests was 0% or more and less than 20%, and was evaluated as "×" (poor) in the case where the area proportion of the rust was 20% or more.

### <<Small amount of spatter>>

As a result of a sensory evaluation during pulsed arc welding, the case of particularly small amount of spatter was evaluated as "A", the case of small amount of spatter was evaluated as "B", the case of slightly small amount of spatter was evaluated as "C", and the case of many short circuits and large amount of spatter was evaluated as "D" (poor).

The chemical components of each wire used and evaluation results of each test are shown together in Table 2 below. The remainder of the chemical components of the wire is Fe and inevitable impurities, and the amount of each component in the wire is indicated by a content (mass%) relative to the total mass of the wire. Further, in the columns of the evaluation results of rust prevention, "-" means that the measurement is not performed.

**Table 2**

| | Wire No. | Chemical components of wire (mass%, remainder: Fe and inevitable impurities) | | | | | | | |
|---|---|---|---|---|---|---|---|---|---|
| | | C | Si | Mn | P | S | Cu | Ti | Al |
| Example | 1 | 0.07 | 0.40 | 1.91 | 0.006 | 0.002 | 0.16 | 0.10 | 0.001 |
| | 2 | 0.05 | 0.41 | 1.94 | 0.010 | 0.005 | 0.16 | 0.07 | 0.001 |
| | 3 | 0.06 | 0.40 | 1.92 | 0.011 | 0.004 | 0.16 | 0.14 | 0.001 |
| | 4 | 0.06 | 0.41 | 1.93 | 0.011 | 0.004 | 0.16 | 0.20 | 0.001 |
| | 5 | 0.05 | 0.23 | 1.92 | 0.015 | 0.006 | 0.17 | 0.19 | 0.001 |
| | 6 | 0.05 | 0.15 | 1.95 | 0.010 | 0.006 | 0.18 | 0.19 | 0.001 |
| | 7 | 0.05 | 0.10 | 1.96 | 0.010 | 0.006 | 0.17 | 0.20 | 0.001 |
| | 8 | 0.05 | 0.10 | 1.90 | 0.010 | 0.009 | 0.15 | 0.08 | 0.001 |
| | 9 | 0.05 | 0.06 | 1.86 | 0.008 | 0.002 | 0.18 | 0.17 | 0.011 |
| | 10 | 0.05 | 0.07 | 1.89 | 0.008 | 0.004 | 0.17 | 0.19 | 0.029 |
| Comparative Example | 11 | 0.04 | 0.28 | 0.63 | 0.011 | 0.026 | 0.16 | <0.01 | 0.001 |
| | 12 | 0.05 | 0.30 | 2.00 | 0.011 | 0.010 | 0.16 | <0.01 | 0.001 |
| | 13 | 0.05 | 0.40 | 1.93 | 0.012 | 0.007 | 0.16 | 0.03 | 0.001 |
| | 14 | 0.03 | 0.40 | 1.93 | 0.012 | 0.016 | 0.18 | 0.06 | 0.001 |
| | 15 | 0.05 | 0.42 | 1.54 | 0.015 | 0.006 | 0.18 | 0.19 | 0.001 |
| | 15 | 0.05 | 0.61 | 1.12 | 0.011 | 0.030 | 0.20 | 0.20 | 0.001 |
| | 16 | 0.06 | 0.61 | 1.12 | 0.011 | 0.007 | 0.17 | 0.30 | 0.001 |
| | 17 | 0.08 | 0.65 | 1.37 | 0.012 | 0.005 | 0.16 | <0.001 | 0.001 |
| | 18 | 0.03 | 0.51 | 0.85 | 0.012 | 0.027 | 0.18 | <0.01 | 0.10 |
| | 19 | 0.05 | 0.62 | 1.12 | 0.012 | 0.030 | 0.17 | <0.01 | 0.20 |
| | 20 | 0.09 | 0.01 | 1.52 | 0.005 | 0.008 | 0.25 | 0.18 | 0.03 |

**Table 2 continued**

| | Wire No. | [Ti]/ [Si] | ([Si]+[Ti]/3)/ ([C]/2+2×[Al]) | Evaluation results | | |
|---|---|---|---|---|---|---|
| | | | | Slag adhesiveness | Rust prevention | Small amount of spatter |
| Example | 1 | 0.25 | 11.71 | ○ | ○ | A |
| | 2 | 0.17 | 16.05 | ○ | ○ | A |
| | 3 | 0.35 | 13.96 | ○ | ○ | A |
| | 4 | 0.49 | 14.90 | ○ | ○ | A |
| | 5 | 0.83 | 10.86 | ○ | ○ | A |
| | 6 | 1.27 | 7.90 | ○ | ○ | A |
| | 7 | 2.00 | 6.17 | ○ | ○ | B |
| | 8 | 0.80 | 4.69 | ○ | ○ | C |
| | 9 | 2.83 | 2.48 | ○ | ○ | C |
| | 10 | 2.71 | 1.61 | ○ | ○ | C |
| Comparative Example | 11 | <0.04 | 12.73 | × | ○ | - |
| | 12 | <0.03 | 11.11 | × | × | - |
| | 13 | 0.08 | 14.81 | × | - | - |
| | 14 | 0.15 | 23.53 | × | - | - |
| | 15 | 0.15 | 15.56 | × | - | - |
| | 15 | 0.33 | 22.59 | × | × | - |
| | 16 | 0.49 | 19.06 | × | ○ | - |
| | 17 | <0.1 | 15.48 | × | × | - |
| | 18 | <0.1 | 2.37 | × | - | - |
| | 19 | <0.1 | 1.46 | × | - | - |
| | 20 | 18.00 | 0.11 | ○ | ○ | D |

As shown in Table 2 above, regarding the wire No. 6 to 7, and No 9 to 10 that were Invention Examples, the components of the wires were within the range of the present invention, the amount of spatter generated during welding was small. In addition, in these Invention Examples, the slag adhesiveness is good, an electrodeposition coating film could be formed in a good state without removing the slag, and as a result, excellent rust prevention could be obtained.

Wires No 1 to 5 and No 8 are Reference Examples in Tables 1-2.

In contrast, regarding the wire No. 11 that was Comparative Example, each of the content of Mn and content of Ti in the wire, and the value of [Ti]/[Si] was less than the lower limit of the range of the present invention, and the content of S was more than the upper limit of the range of the present invention, and thus the slag adhesiveness was poor.

Regarding the wire No. 12 that was Comparative Example, each of the content of Ti in the wire and the value of [Ti]/[Si] was less than the lower limit of the range of the present invention, and thus both the slag adhesiveness and rust prevention were poor.

Regarding the wire No. 13 that was Comparative Example, the content of Ti in the wire was less than the lower limit of the range of the present invention, and thus the slag adhesiveness was poor.

Regarding the wire No. 14 that was Comparative Example, the content of S in the wire was more than the upper limit of the range of the present invention, and thus the slag adhesiveness was poor.

Regarding the wire No. 15 that was Comparative Example, the content of Mn in the wire was less than the lower limit of the range of the present invention, and the content of Si and content of S were more than the upper limit of the range of the present invention, and thus both the slag adhesiveness and rust prevention were poor.

Regarding the wire No. 16 that was Comparative Example, each of the content of Mn and content of Ti in the wire and the value of [Ti]/[Si] was less than the lower limit of the range of the present invention, and the content of Si was more than the upper limit of the range of the present invention, and thus both the slag adhesiveness and rust prevention were poor.

Regarding the wire No. 17 that was Comparative Example, each of the content of Mn and content of Ti in the wire and the value of [Ti]/[Si] was less than the lower limit of the range of the present invention, and the content of Si was more than the upper limit of the range of the present invention, and thus both the slag adhesiveness and rust prevention were poor.

Regarding the wire No. 18 that was Comparative Example, each of the content of Mn and content of Ti in the wire and the value of [Ti]/[Si] was less than the lower limit of the range of the present invention, and the content of Al was more than the upper limit of the range of the present invention, and thus both the slag adhesiveness and rust prevention were poor.

Regarding the wire No. 19 that was Comparative Example, each of the content of Mn and content of Ti in the wire and the value of [Ti]/[Si] was less than the lower limit of the range of the present invention, and each of the content of Si and content of Al was more than the upper limit of the range of the present invention, and thus both the slag adhesiveness and rust prevention were poor.

Regarding the wire No. 20 that was Comparative Example, the content of Si in the wire was less than the lower limit of the range of the present invention, and thus the amount of spatter generated during welding was large and this case was poor.

As described in detail above, by using the wire for gas-shielded arc welding in the embodiment of the present invention, the amount of spatter generated during welding is small, and a step of removal of the slag after welding or the like is unnecessary, and a weld portion having excellent electrodeposition coatability can be obtained.

Various embodiments are described above with reference to drawings, but it goes without saying that the present invention is not limited to such embodiments. It would obvious to a person skilled in the art to conceive of various modifications or changes within the scope of the claims, and these modifications and changes are also naturally understood to belong to the technical scope of the present invention.

This application is based on Japanese patent application No. 2019-168877 filed on September 17, 2019.

### Reference Signs List

- 1,2:: Steel sheet
- 3:: Weld metal
- 4:: Welding torch
- 4a:: Wire

## Claims

1. A wire for gas-shielded arc welding, comprising, based on a total mass of the wire:
C: 0.01 mass% or more and 0.10 mass% or less;
Si: 0.05 mass% or more and 0.55 mass% or less;
Mn: 1.60 mass% or more and 2.40 mass% or less;
Ti: 0.05 mass% or more and 0.25 mass% or less;
Cu: 0.30 mass% or less;
Al: 0.10 mass% or less;
P: 0.025 mass% or less,
S: 0.010 mass% or less;
Ni ≤ 0.10 mass%;
Cr ≤ 0.10 mass%;
Co ≤ 0.10 mass%; and
Sb ≤ 0.01 mass%;
with the remainder being Fe and inevitable impurities,
wherein the following relationship is satisfied:$1.0 \leq \left[Ti\right] / \left[Si\right] \leq 3.0$
wherein [Si] is the content of Si in mass% based on the total mass of the wire and [Ti] is the content of Ti in mass% based on the total mass of the wire.

2. The wire for gas-shielded arc welding according to claim 1, wherein the content of Si is 0.15 mass% or more.

3. The wire for gas-shielded arc welding according to claim 1 or 2, wherein the content of Ti is 0.12 mass% or more.

4. The wire for gas-shielded arc welding according to claim 1 or 2, wherein the following relationship is satisfied: ([Si] + [Ti]/3)/([C]/2 + 2×[Al]) ≥ 5.

5. The wire for gas-shielded arc welding according to claim 3, wherein the following relationship is satisfied: ([Si] + [Ti]/3)/([C]/2 + 2×[Al]) ≥ 5.

6. The wire for gas-shielded arc welding according to any one of claims 1 to 5, wherein the content of Si is 0.25 mass% or less.

## Patentansprüche

1. Draht zum Schutzgasschweißen, umfassend, bezogen auf die Gesamtmasse des Drahts:
C: 0,01 Massen-% oder mehr und 0,10 Massen-% oder weniger;
Si: 0,05 Massen-% oder mehr und 0,55 Massen-% oder weniger;
Mn: 1,60 Massen-% oder mehr und 2,40 Massen-% oder weniger;
Ti: 0,05 Massen-% oder mehr und 0,25 Massen-% oder weniger;
Cu: 0,30 Massen-% oder weniger;
Al: 0,10 Massen-% oder weniger;
P: 0,025 Massen-% oder weniger,
S: 0,010 Massen-% oder weniger;
Ni ≤ 0,10 Massen-%;
Cr ≤ 0,10 Massen-%;
Co ≤ 0,10 Massen-%; und
Sb ≤ 0,01 Massen-%;
wobei der Rest Fe und unvermeidbare Verunreinigungen sind,
wobei die folgende Beziehung erfüllt ist:$1 , 0 \leq \left[Ti\right] / \left[Si\right] \leq 3 , 0$
wobei [Si] der Gehalt an Si in Massen-% bezogen auf die Gesamtmasse des Drahts ist und [Ti] der Gehalt an Ti in Massen-% bezogen auf die Gesamtmasse des Drahts ist.

2. Draht zum Schutzgasschweißen nach Anspruch 1, wobei der Gehalt an Si 0,15 Massen-% oder mehr beträgt.

3. Draht zum Schutzgasschweißen nach Anspruch 1 oder 2, wobei der Gehalt an Ti 0,12 Massen-% oder mehr beträgt.

4. Draht zum Schutzgasschweißen nach Anspruch 1 oder 2, wobei die folgende Beziehung erfüllt ist: ([Si] + [Ti]/3)/([C]/2 + 2×[Al]) ≥ 5.

5. Draht zum Schutzgasschweißen nach Anspruch 3, wobei die folgende Beziehung erfüllt ist: ([Si] + [Ti]/3)/([C]/2 + 2×[Al]) ≥ 5.

6. Draht zum Schutzgasschweißen nach einem der Ansprüche 1 bis 5, wobei der Gehalt an Si 0,25 Massen-% oder weniger beträgt.

## Revendications

1. Fil pour soudage à l'arc sous protection gazeuse, comprenant, basés sur une masse totale du fil :
C : 0,01 % en masse ou plus et 0,10 % en masse ou moins ;
Si : 0,05 % en masse ou plus et 0,55 % en masse ou moins ;
Mn : 1,60 % en masse ou plus et 2,40 % en masse ou moins ;
Ti : 0,05 % en masse ou plus et 0,25 % en masse ou moins ;
Cu : 0,30 % en masse ou moins ;
Al : 0,10 % en masse ou moins ;
P : 0,025 % en masse ou moins ;
S : 0,010 % en masse ou moins ;
Ni ≤ 0,10 % en masse ;
Cr ≤ 0,10 % en masse ;
Co ≤ 0,10 % en masse ; et
Sb ≤ 0,01 % en masse ;
avec le reste qui est Fe et des impuretés inévitables,
dans lequel la relation suivante est satisfaite :$1 , 0 \leq \left[Ti\right] / \left[Si\right] \leq 3 , 0$
dans laquelle [Si] est la teneur en Si en % en masse basée sur la masse totale du fil et [Ti] est la teneur en Ti en % en masse basée sur la masse totale du fil.

2. **Fil pour** soudage à l'arc sous protection gazeuse selon la revendication 1, dans lequel la teneur en Si est de 0,15 % en masse ou plus.

3. Fil pour soudage à l'arc sous protection gazeuse selon la revendication 1 ou 2, dans lequel la teneur en Ti est de 0,12 % en masse ou plus.

4. Fil pour soudage à l'arc sous protection gazeuse selon la revendication 1 ou 2, dans lequel la relation suivante est satisfaite : ([Si] + [Ti]/3)/([C]/2 + 2x[Al]) ≥ 5.

5. Fil pour soudage à l'arc sous protection gazeuse selon la revendication 3, dans lequel la relation suivante est satisfaite : ([Si] + [Ti]/3)/([C]/2 + 2x[Al]) ≥ 5.

6. Fil pour soudage à l'arc sous protection gazeuse selon l'une quelconque des revendications 1 à 5, dans lequel la teneur en Si est de 0,25 % en masse ou moins.
